# EUROPEAN PATENT SPECIFICATION

(11) **EP 4 497 611 B1**
(45) Date of publication and mention of the grant of the patent: **29.04.2026**
(21) Application number: 24187923.8
(22) Date of filing: 11.07.2024
(51) Int. Cl.: B60C 11/12

(54) **PNEUMATIC TIRE**
LUFTREIFEN
PNEUMATIQUE

(30) Priority: 28.07.2023 JP 2023123442
(43) Date of publication of application: 29.01.2025
(73) Proprietor: Toyo Tire Corporation, Itami-shi, Hyogo 664-0847 (JP)
(72) Inventor: ISHIHARA, Seiya, Hyogo, 664-0847 (JP)
(74) Representative: Müller-Boré & Partner Patentanwälte PartG mbB

(56) References cited:
- WO-A1-2019/001789
- WO-A1-2020/102056
- WO-A1-2023/074032

## Description

### BACKGROUND OF THE INVENTION

### Field of the Invention

The present invention relates to a pneumatic tire.

### Related Art

Conventionally, a tire has been known which includes a tread including a tread surface which contacts the road surface. The tread has a so-called block pattern in which a plurality of blocks are defined by a plurality of grooves extending in the tire-circumferential direction or in a direction intersecting the tire-circumferential direction. The blocks are arranged in the tire-circumferential direction. Patent Document 1 discloses a pneumatic tire in which a plurality of sipes are formed for improving the grip performance of the tire, thereby exhibiting the edge effect in such blocks.

Patent Document 1: Japanese Unexamined Patent Application, Publication No. 2001-163015

Document WO 2019/001789 A1 describes a pneumatic vehicle tire comprising a tread with shoulder-side blocks, which belong to shoulder block rows, and central blocks between the shoulder-side blocks. Each of the shoulder-side blocks and the central blocks is provided with at least two sipes which extend substantially parallel to each other in a plan view and at an angle of up to 35° relative to the axial direction and which have a width of 0.4 mm to 0.8 mm and a depth of at least 50% of the profile depth at the deepest point of the sipes. Each of the blocks is provided with multiple micro grooves, in particular at least four micro grooves, which extend substantially parallel to the sipes in a plan view and have a width of 0.2 mm to 0.5 mm and a depth of 0.2 mm to 0.5 mm. At least two micro grooves run between at least two sipes in each block. Furthermore, at least one respective micro groove runs in each block between the other sipes. Only one single micro groove runs between at least one of the sipes running on the block edge side and the block edge region.

### SUMMARY OF THE INVENTION

The above Patent Document 1 shows blocks that has a shape of a substantially parallelogram in which acute angle regions are formed respectively at both ends thereof. In such blocks, since the rigidity in the acute angle region is low, block chipping tends to occur. Since the block chipping leads to a decline in durability and traction of the tire, improvement has been demanded.

The present invention has an object of providing a pneumatic tire achieving a rigidity improvement in acute angle areas of blocks, thereby improving the durability and traction of the tire.

The claimed invention is defined by the features set forth in the appended independent claims. Additional embodiments of the claimed invention are defined by the dependent claims.

The present invention provides a pneumatic tire achieving a rigidity improvement in acute angle areas of blocks, thereby improving the durability and traction of the tire.

### BRIEF DESCRIPTION OF THE DRAWINGS

FIG. 1 is a partial expanded drawing of an outer circumferential surface of a tire, showing a tread pattern of a pneumatic tire according to an embodiment;
FIG. 2 is a perspective view showing a shoulder sipe according to the embodiment;
FIG. 3A is a view of the arrow direction along IIIA-IIIA in FIG. 2;
FIG. 3B is a cross-sectional view along the line IIIB-IIIB in FIG. 2;
FIG. 3C is a cross-sectional view along the line IIIC-IIIC in FIG. 2;
FIG. 3D is a cross-sectional view along the line IIID-IIID in FIG. 2;
FIG. 4 is a cross-sectional view along the line IV-IV in FIG. 3A;
FIG. 5 is a perspective view showing a central sipe according to the embodiment;
FIG. 6A is a view of the arrow direction along VIA-VIA in FIG. 5;
FIG. 6B is a cross-sectional view along the line VIB-VIB in FIG. 5;
FIG. 6C is a cross-sectional view along the line VIC-VIC in FIG. 5;
FIG. 6D is a cross-sectional view along the line VID-VID in FIG. 5;
FIG. 7 is a cross-sectional view along the line VII-VII in FIG. 6A;
FIG. 8A is a plan view schematically showing a wave-shaped opening in a shoulder sipe of the embodiment;
FIG. 8B is a plan view schematically showing a wave-shaped bottom in a shoulder sipe of the embodiment;
FIG. 9A is a plan view schematically showing a wave-shaped opening in a central sipe of the embodiment;
FIG. 9B is a plan view schematically showing a wave-shaped bottom in a central sipe of the embodiment;
FIG. 10A is a plan view schematically showing a wave-shaped opening in an intermediate sipe of the embodiment;
FIG. 10B is a plan view schematically showing a wave-shaped bottom in an intermediate sipe of the embodiment; and
FIG. 11 is a plan view of a first central block of blocks according to the embodiment.

### DETAILED DESCRIPTION OF THE INVENTION

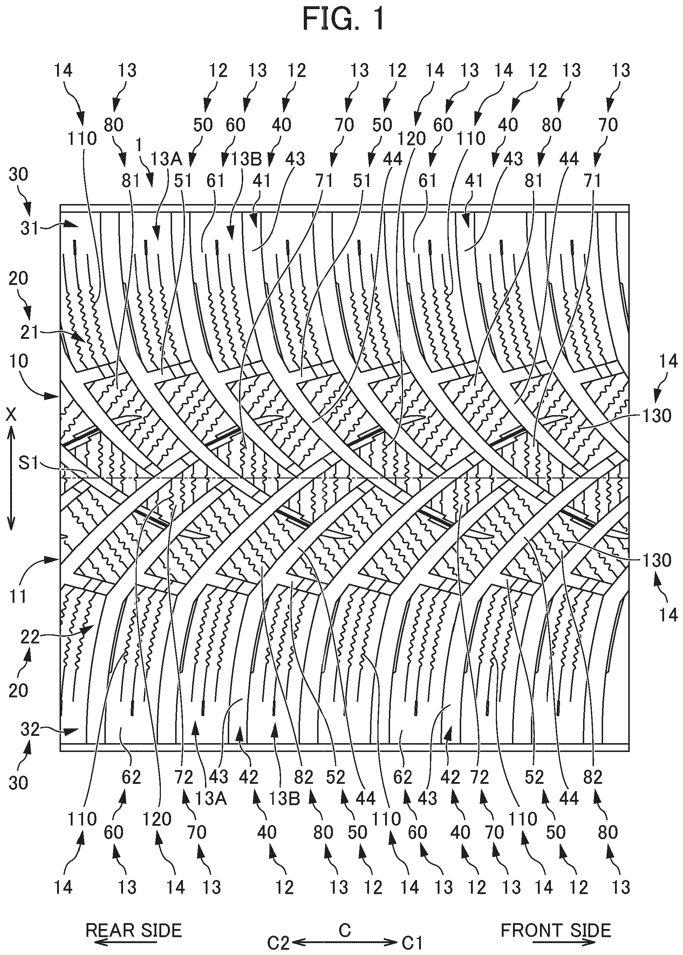

Hereinafter, an embodiment will be described while referencing the drawings. FIG. 1 is a view expanding a part of the outer circumferential surface of a tire 1 in a plan view. The tire 1 is a pneumatic tire according to the embodiment. The tire 1 according to the embodiment can be applied to a tire for passenger vehicles; however, besides this, it can be also applied to a tire for various vehicles such as light trucks, trucks and buses

FIG. 1 shows a tire-axial direction X and a tire-circumferential direction **C.** In the tire 1 according to the embodiment, one side of the tire-circumferential direction is defined as a rotational direction during forward advancement of the vehicle on which the tire 1 is mounted, and C1 direction shown in FIG. 1 corresponds to this rotational direction. It should be noted that the front side referred to in the following description is the right side of FIG. 1, and indicates a side in the advancing direction of the vehicle defined as the tire rotation direction C1. The rear side is the left side in FIG. 1, and indicates the reverse direction of the vehicle defined as rotation direction C2 which is the opposite direction to the tire rotation direction C1.

FIG. 1 shows the tread 10 of the tire 1, and shoulders 30 on both tire-axial sides of the tread 10. The shoulder 30 is a portion transitioning from the tread 10 to each of the sidewalls (not shown) on both sides in the tire axial direction, and is a portion corresponding to the shoulder of the tire 1. The shoulder 30 includes a first shoulder 31 on the upper side in FIG. 1, and a second shoulder 32 on the lower side in FIG. 1.

### (Tread Pattern)

The tread 10 has a tread surface 20 to be in contact with the road surface. A tread pattern 11 is formed on the tread surface 20. The tread pattern 11 is mainly designed by a plurality of grooves 12, and a plurality of blocks 13 defined by these grooves 12. FIG. 1 shows a tire equatorial plane S1, which is a virtual line extending at the tire-axial center of the tread surface 20 along the tire circumferential direction.

When defining the tire axial direction as the left/right direction, the tread pattern 11 is substantially left/right symmetrical with the tire equatorial plane S1 as the symmetrical line, except that the tread pattern 11 is somewhat displaced in the tire circumferential direction. The tread surface 20 includes a first tread surface 21 close to the first shoulder 31, and a second tread surface 22 close to the second shoulder 32, with the tire equatorial plane S1 as a boundary.

### (Grooves of Tread Pattern)

The grooves 12 of the tread pattern 11 include a plurality of slanted grooves 40, and a plurality of communication grooves 50. The slanted grooves 40 and the communication grooves 50 according to the embodiment are grooves having a groove width exceeding 1 mm.

The slanted grooves 40 are grooves extending from both tire-axial sides toward the tire equatorial plane S1. These slanted grooves 40 are arranged at intervals in the tire-circumferential direction. The plurality of slanted grooves 40 includes first slanted grooves 41 extending from the first shoulder 31 toward the tire equatorial plane S1, and second slanted grooves 42 extending from the second shoulder 32 toward the tire equatorial plane S1. The first slanted groove 41 is formed mainly on the first tread surface 21, and the second sloped groove 42 is mainly formed on the second tread surface 22.

The communication grooves 50 include first communication grooves 51 and second communication grooves 52. Each of the first communication grooves communicates with a pair of first slanted grooves 41 adjacent in the tire-circumferential direction. Each of the second communication grooves 52 communicates with a pair of second slanted grooves 42 adjacent in the tire-circumferential direction. The first communication grooves 51 are formed in the first tread surface 21, and the second communication grooves 52 are formed in the second tread surface 22.

Since the tread pattern 11 is left/right symmetrical, the first slanted grooves 41 and second slanted grooves 42 have similar features, and the first communication grooves 51 and second communication grooves 52 have similar features.

The first slanted grooves 41 are grooves extending from the first shoulder 31 toward the tire equatorial plane S1, in which the slanted grooves 41 generally slope relative to the tire-circumferential direction while gradually curving so that the slanted grooves 41 extend toward the front side and is convex toward the rear side. The second slanted grooves 42 are grooves extending from the second shoulder 32 toward the tire equatorial plane S1, in which the slanted grooves 42 generally slope relative to the tire-circumferential direction while gradually curving so that the slanted grooves 42 extend toward the front side and is convex toward the rear side. Herein, each slanted grooves 41, 42 has an end close to the side of the shoulder 30 (first shoulder 31, second shoulder 32) defined as a base end, and an end close to the side of the tire equatorial plane S1 defined as a leading end.

The first slanted groove 41 includes a base-end side curved part 43 and a leading-end side curved part 44. The base-end side curved part 43 extends from the base end to a portion beyond the tire-width center of the first tread surface 21. The leading-end side curved part 44 curves from an end close to the side of the tire equatorial plane S1 of the base-end side curved part 43 toward the tire equatorial plane S1 to the leading end. The base-end side curved part 43 curves with a relatively small curvature, and is slightly sloped to the front side. The leading-end side curved part 44 curves with a similar curvature to the base-end side curved part 43, and slopes to the front side at a sharper angle than the base-end side curved part 43.

The second slanted groove 42 is a similar form to the first slanted groove 41. In other words, the second slanted groove 42 includes a based-end curved part 43 and a leading-end side curved part 44. The based-end curved part 43 extends from the base end to a portion beyond the tire-width center of the second tread surface 22. The leading-end side curved part 44 curves from an end close to the tire equatorial plane S1 of the base-end side curved part 43 toward the tire equatorial plane S1 and to the leading end.

The plurality of first slanted grooves 41 arranged in the tire-circumferential direction have alternately different lengths. The leading end of the shorter first slanted grooves 41 terminates such that it merges with the second slanted groove 42 immediately before the tire equatorial plane S1. The leading end of the longer first slanted groove 41 passes through the tire equatorial plane S1, and then terminates after crossing the leading-end side curved part 44 of the two second slanted grooves 42 adjacent in the tire-circumferential direction.

The length of the second slanted grooves 42 also differ alternately in the tire-circumferential direction similarly to the first slanted grooves 41. In other words, the leading end of the shorter second slanted groove 42 terminates such that it merges with the first slanted groove 41 immediately before the tire equatorial plane S1. The leading end of the longer second slanted groove 42 passes through the tire equatorial plane S1, and then terminates after crossing the leading-end side curved part 44 of the two first slanted grooves 41 adjacent in the tire-circumferential direction.

The first communication groove 51 extends from the end of the leading-end side curved part 44 of the first slanted groove 41 close to the base-end side curved part 43, straight toward a bending point of the first slanted groove 41 on the front side in the tire-circumferential direction. The bending point is a point where the first slanted groove 41 transitions from the base-end side curved part 43 to the leading-end side curved part 44.

The second communication groove 52 is similar to the first communication groove 51, and extends from the end of the leading-end side curved part 44 of the second sloped groove 42 close to the base-end side curved part 43, straight to a bending point of the second slanted groove 42 on the front side in the tire-circumferential direction. The bending point is a point where the second slanted groove 42 transitions from the base-end side curved part 43 to the leading-end side curved part 44.

The first communication groove 51 and second communication groove 52 both slope relative to the tire-circumferential direction so as to be directed toward the outer side in the tire-circumferential direction, as extending from the rear side to the front side.

### (Blocks of Tread Pattern)

The blocks 13 of the tread pattern 11 include a plurality of shoulder blocks 60 arranged in the outermost positions in the tire-axial direction, a plurality of central blocks 70 arranged at the center in the tire-axial direction, and a plurality of intermediate blocks 80 arranged between the should blocks 60 and the central blocks 70 in the tire-axial direction.

The shoulder blocks 60 include first shoulder blocks 61 close to the first shoulder 31, and second shoulder blocks 62 close to the second shoulder 32.

Each of the first shoulder blocks 61 are defined as an approximately rectangular shapes by a pair of the first slanted grooves 41 adjacent in the tire-circumferential direction, and the first communication groove 51. The edge of the first shoulder block 61 close to the first shoulder 31 continues to the outer surface of the first shoulder 31. The plurality of first shoulder blocks 61 are arranged in the tire-circumferential direction to sandwich the base-end side curved part 43 of the first slanted groove 41.

Each of the second shoulder blocks 62 is defined as an approximately rectangular shapes, by the pair of the second slanted grooves 42 adjacent in the tire-circumferential direction, and the second communication groove 52. The edge of the second shoulder block 62 close to the second shoulder 32 continues to the outer surface of the second shoulder 32. The plurality of second shoulder blocks 62 are aligned in the tire-circumferential direction to sandwich the base-end side curved part 43 of the second slanted groove 42.

The first shoulder blocks 61 and the second shoulder blocks 62, which are arranged in the tire-circumferential direction to sandwich the base-end side curved part 43 of the slanted groove 40, may be arranged at equal intervals in the tire-circumferential direction, or may be arranged at variable pitch, which are irregular intervals.

The central blocks 70 are arranged in a manner such that they span both the first tread surface 21 and second tread surface 22. In other words, the tire equatorial plane S1 passes through all of the central blocks 70. The plurality of central blocks 70 includes a plurality of first central blocks 71 existing mainly on the first tread surface 21, and a plurality of second central blocks 72 existing mainly on the second tread surface 22.

The first central block 71 has a larger proportion occupying the surface area in the first tread surface 21 than in the second tread surface 22. Each of the first central blocks 71 is defined as a substantially rectangular shape by the leading-end side curved part 44 of the pair of first slanted grooves 41 adjacent in the tire-circumferential direction, and the leading-end side curved part 44 of the second slanted groove 42 having greater length among the plurality of second slanted grooves 42.

The second central block 72 has a greater proportion occupying the surface area in the second tread surface 22 than in the first tread surface 21. Each of the second central blocks 72 is defined as a substantially rectangular shape, by the leading-end side curved part 44 of the pair of second slanted grooves 42 adjacent in the tire-circumferential direction, and the leading-end side curved part 44 of the first slanted groove 41 having a larger length among the plurality of first slanted grooves 41.

Each of the plurality of the first central blocks 71 and each of the plurality of second central blocks 72 are alternately arranged in the tire-circumferential direction.

The intermediate block 80 includes a first intermediate block 81 close to the first tread surface 21, and a second intermediate block 82 close to the second tread surface 22.

Each of the first intermediate block 81 is defined as an approximately rectangular shape by the leading-end side curved parts 44 of the pair of first slanted grooves 41 adjacent in the tire-circumferential direction, the first communication groove 51, and the leading-end side curved part 44 of the second slanted groove 42 having longer length. The plurality of first intermediate blocks 81 are arranged in the tire-circumferential direction to sandwich the leading-end side curved part 44 of the first slanted groove 41.

Each of the second intermediate blocks 82 is defined as an approximately rectangular shape by the leading-end side curved part 44 of the pair of the second slanted grooves 42 adjacent in the tire-circumferential direction, the second communication groove 52, and the leading-end side curved part 44 of the second slanted groove 42 having a longer length. The plurality of second intermediate blocks 82 are arranged in the tire-circumferential direction to sandwich the leading-end side curved part 44 of the second slanted groove 42.

The first intermediate blocks 81 are arranged between the shoulder blocks 60 and the central blocks 70 in the tire-axial direction. The second intermediate blocks 82 are arranged between the shoulder blocks 60 and the central blocks 70 in the tire-axial direction.

As described above, the tire equatorial plane S1 passes through all of the central blocks 70. On the other hand, the tire equatorial plane S1 neither pass through the shoulder block 60 nor the intermediate block 80.

In the first tread surface 21, as the plurality of blocks 13 along the first slanted groove 41, block columns 13A and block columns 13B are alternately arranged in the tire-circumferential direction. The block column 13A includes, as the three blocks 13, the first shoulder block 61, the first intermediate block 81, and the first central block 71 that extend in this order from the first shoulder 31 side towards the tire equatorial plane S1. The block column 13B includes, as the two blocks 13, the first shoulder block 61 and first intermediate block 81 that extend in this order from the first shoulder 31 side towards the tire equatorial plane S1.

Similarly, in the second tread surface 22, as the plurality of blocks 13 along the second slanted groove 42, the block columns 13A and block columns 13B are alternately arranged in the tire-circumferential direction. The block column 13A includes, as the three blocks 13, the second shoulder block 62, the second intermediate block 82 , and the second central block 72 that extend in this order from the second shoulder 32 toward the tire equatorial plane S1. The block column 13B includes, as the two blocks 13, the second shoulder block 62 and the second intermediate block 82 that extend in this order.

In both the first tread surface 21 and the second tread surface 22, the intermediate block 80 in the column without the central block 70 has a longer length in the extending direction along the slanted groove 40, than the intermediate block 80 in the column having the central block 70. On the other hand, the shoulder block 60 and the central block 70 have the equal length in the extending direction along the slanted groove 40.

### (Sipes of Blocks)

As shown in FIG. 1, each of the blocks 13 of the tread 10 has a plurality of sipes 14. The plurality of sipes 14 includes shoulder sipes 110, central sipes 120, and intermediate sipes 130. The shoulder sipes 110 are respectively formed in the first shoulder block 61 and second shoulder block 62 (hereinafter, may be collectively called "shoulder block 60"). The central sipes 120 are respectively formed in the first central blocks 71 and the second central blocks 72 (hereinafter, may be collectively called "central block 70"). The intermediate sipes 130 are respectively formed in the first intermediate blocks 81 and the second intermediate blocks 82 (hereinafter, may be collectively called "intermediate block 80"). All sipes have a smaller groove width than the aforementioned slanted groove 40 and the communication groove 50, and this groove width is no more than 1 mm. The number of sipes 14 per each block 13 is arbitrary; however, sipes 14 of the number on the order of 2 to 5, for example, are arranged in one block 13.

The shoulder sipes 110, the central sipes 120 and the intermediate sipes 130 respectively open in the surfaces of the respective blocks 60, 70, and 80, and have a wavy shape as a whole in a tire surface view. The depth direction of the sipes 110, 120, 130 substantially follows the tire-radial direction.

As shown in FIG. 1, each shoulder block 60 respectively has a plurality of shoulder sipes 110. The shoulder sipes 110 extend almost straight as a whole. In each of the respective shoulder blocks 60, the plurality of shoulder sipes 110 are arranged in parallel to each other at intervals. The plurality of shoulder sipes 110 extend substantially in parallel to the extending direction of the shoulder blocks 60 along the slanted groove 40. In other words, the shoulder sipes 110 extend in the direction intersecting the tire-circumferential direction. The end on the tire-axial inner side (tire equatorial plan S1 side) of the shoulder sipe 110 communicates with the first communication groove 51 and the second communication groove 52 (hereinafter, may be collectively called communication groove 50). The end on the tire-axial outer side (shoulder 30 side) of the shoulder sipe 110 terminates without reaching the end on the tire-axial outer side of the shoulder block 60.

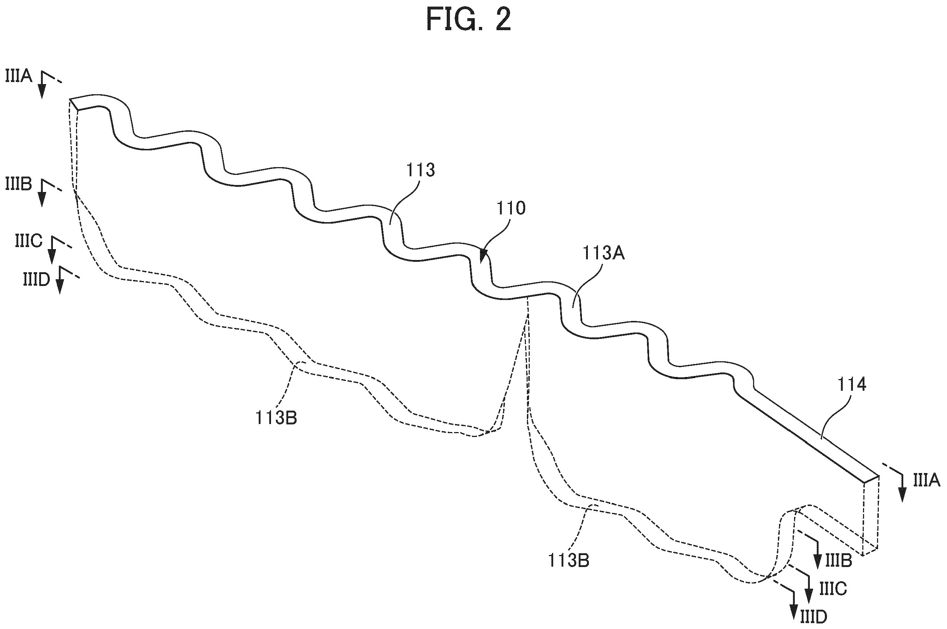

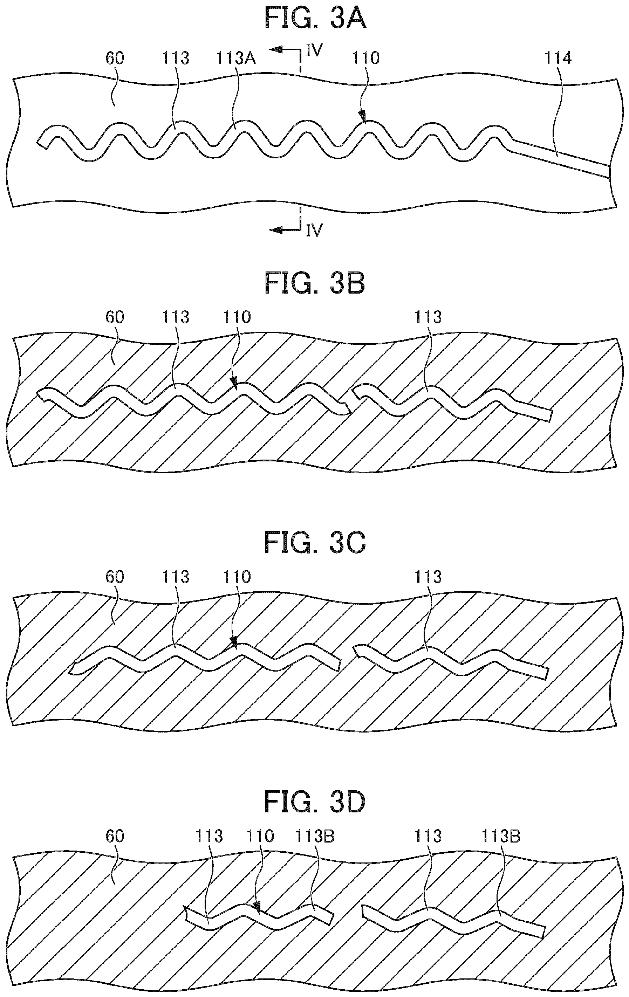

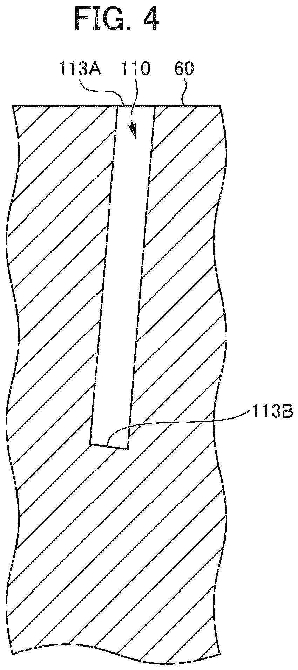

FIG. 2 is a perspective view showing one shoulder sipe 110. FIG. 3A is an arrow view along IIIA-IIIA in FIG. 2. FIG. 3B is a cross-sectional view along the line IIIB-IIIB in FIG. 2. FIG. 3C is a cross-sectional view along the line IIIC-IIIC in FIG. 2. FIG. 3D is a cross-sectional view along the line IIID-IIID in FIG. 2. FIG. 4 is a cross-sectional view along the line IV-IV in FIG. 3A.

As shown in FIG. 2, the shoulder sipe 110 has a wavy-shaped part 113 and a sipe bridge 114. The wavy-shaped part 113 is formed in a wavy shape extending along the extending direction. The sipe bridge 114 extends straight from an end of the wavy shaped part 113 to the communication groove 50, and has a smaller depth than that of the wavy shaped part 113. In addition, the shoulder sipe 110 has an opening 113A in the surface of the shoulder block 60, and a bottom 113B. The wavy shaped part 113 occupies a large portion, e.g., at least 70% of the extending direction length of the shoulder sipe 110. The depth of the wavy shaped part 113, a length between the opening 113A and the bottom 113B is set on the order of 5.0 mm to 7.0 mm, for example, and the depth of the sipe bridge 114 is set on the order of 2.0 mm to 4.0 mm, for example; however, they are not limited thereto.

As shown in FIG. 2 and FIGS. 3A to 3D, the wavy shaped part 113 of the shoulder sipe 110 is formed in a wavy shape having a fixed period and the wavy shape extends from the opening 113A to the bottom 113B. The amplitude of the wavy shape part 113 is largest at the opening 113A, and smallest at the bottom 113B. In other words, the shoulder sipe 110 has a wavy shape at the bottom 113B, and the bottom 113B does not have a linear shape. The amplitudes of the opening 113A at the surface of the shoulder block 60 of the plurality of shoulder sipes 110 are equal to each other. Furthermore, the amplitude of the shoulder sipe 110 decreases at a fixed or constant rate of change from the opening 113A to the bottom 113B. In addition, as shown in FIG. 4, the width of a gap between opposing inner surfaces of the shoulder sipe 110 has a substantially fixed dimension from the opening 113A to the bottom 113B. Accordingly, in a cross-sectional view in the depth direction which is substantially orthogonal to the extending direction of the shoulder sipe 110, as shown in FIG. 4, the shoulder sipe 110 is linear from the opening 113A to the bottom 113B. The width of the shoulder sipe 110 is preferably at least 0.5 mm and no more than 1.5 mm.

It should be noted that the shoulder sipe 110 of the present embodiment has a portion in which part of the wavy shape part 113 is not continuous in the extending direction, i.e., a part is missing, as shown in FIG. 2 and FIGS. 3B to 3D. This is an example of some aspects of the shoulder sipe 110. The shoulder sipe 110 is not to be limited to this, and may have a continuous wavy shape.

As shown in FIG. 1, each of the central blocks 70 has a plurality of central sipes 120. The central sipes 120 extend straight as a whole. In each of the central blocks 70, the plurality of central sipes 120 are arranged in parallel to each other at intervals. The plurality of central sipes 120 extend substantially in parallel with the tire-axial direction. In other words, the central sipe 120 extends in a direction intersecting the tire-circumferential direction. Each of both ends of the central sipe 120 is continuous with either the first slanted groove 41 or the second slanted groove 42 (hereinafter, may be collectively called slanted groove 40).

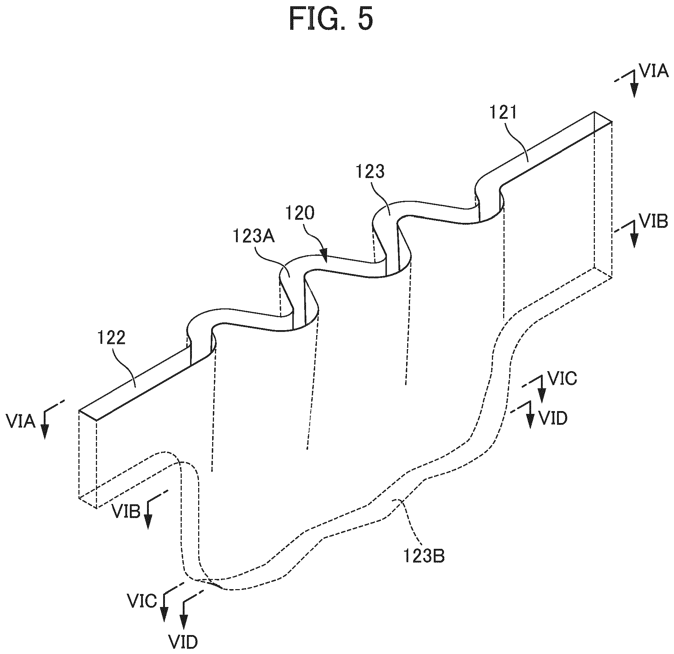

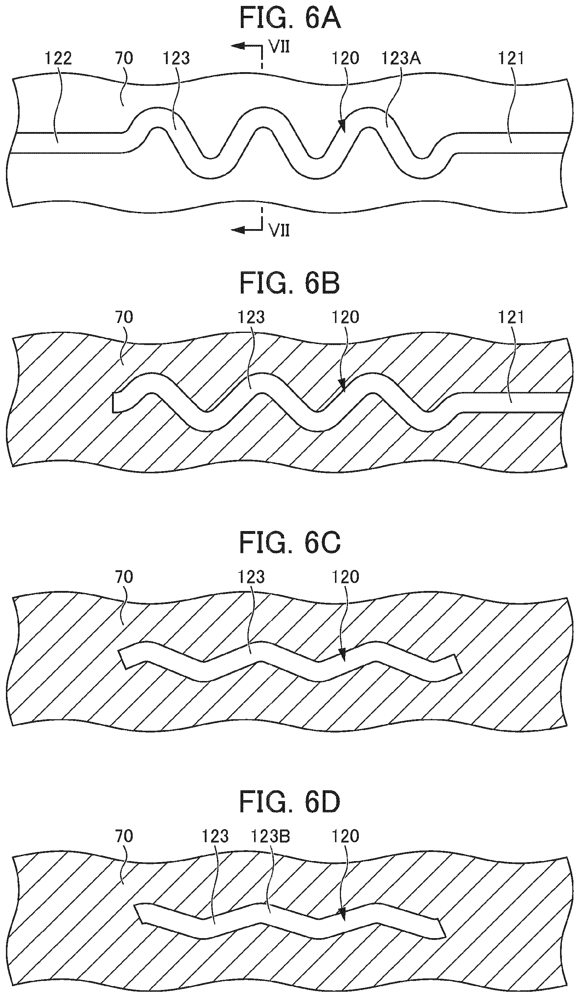

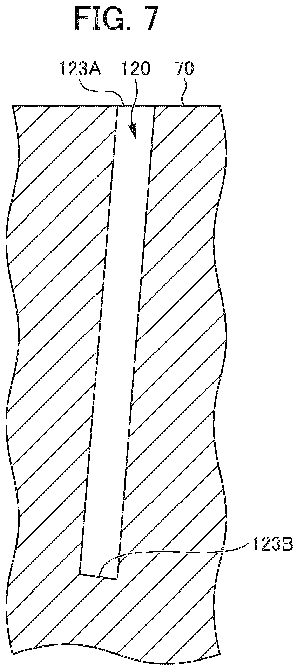

FIG. 5 is a perspective view showing one central sipe 120. FIG. 6A is an arrow view along VIA-VIA in FIG. 5. FIG. 6B is a cross-sectional view along the line VIB-VIB in FIG. 5. FIG. 6C is a cross-sectional view along the line VIC-VIC in FIG. 5. FIG. 6D is a cross-sectional view along the line VID-VID in FIG. 5. FIG. 7 is a cross-sectional view along the line VII-VII in FIG. 6A.

As shown in FIG. 5, the central sipe 120 includes a wavy shape part 123, a first sipe bridge 121, and a second sipe bridge 122. The wavy shape part 123 is formed in a wavy shape along the extending direction. The first sipe bridge 121 extends straight from one end of the wavy shape part 123 to the slanted groove 40, and has smaller depth than the wavy shape part 123. The second sipe bridge 122 extends straight from the other end of the wavy shape part 123 to the slanted groove 40, and has a smaller depth than the first sipe bridge 121. In addition, the central sipe 120 includes an opening 123A at the surface of the central block 70, and ae bottom 123B. The wavy shape part 123 occupies at least 50%, for example, of the length in the extending direction of the central sipe 120. The depth of the wavy shape part 123, i.e., a length between the opening 123A and the bottom 123B is set on the order of 6.0 mm to 7.0 mm, for example, the depth of the first sipe bridge 121 is set on the order of 4 mm, for example, and the depth of the second sipe bridge 122 is set on the order of 2 mm, for example; however, they are not limited thereto.

As shown in FIG. 5 and FIGS. 6A to 6D, the wavy shape part 123 of the central sipe 120 is formed in a wavy shape having a fixed period and the wavy shape extends from the opening 123A to the bottom 123B. The amplitude of the wavy shape part 123 is largest at the opening 123A, and smallest at the bottom 123B. In other words, the central sipe 120 has amplitude at the bottom 123B, and the bottom 123B does not have a linear shape. The amplitudes of the openings 123A in the surfaces of the central blocks 70 of the plurality of central sipes 120 are equal to each other. Furthermore, the amplitude of the central sipe 120 decreases at a fixed rate of change from the opening 123A to the bottom 123B. In addition, as shown in FIG. 7, the width of a gap between opposing inner surfaces of the central sipe 120 has a substantially fixed dimension from the opening 123A to the bottom 123B. Accordingly, in the cross-sectional view in the depth direction that is substantially orthogonal to the extending direction of the central sipe 120 as shown in FIG. 7, the central sipe 120 is linear from the opening 123A to the bottom 123B. The width of the central sipe 120 is preferably at least 0.5 mm and no more than 1.5 mm.

As shown in FIG. 1, each of the intermediate blocks 80 has a plurality of intermediate sipes 130. The intermediate sipe 130 extends straight as a whole. In each of the intermediate blocks 80, the plurality of intermediate sipes 130 are arranged in parallel to each other at intervals. The plurality of intermediate sipes 130 all slant relative to the tire-circumferential direction so as to be directed to the outer side in the tire-circumferential direction as extending from the rear side to the front side. In other words, the intermediate sipe 130 extends in a direction which intersects the tire-circumferential direction. Each of both ends of the intermediate sipe 130 communicate with either of the slanted groove 40 and the communication groove 50.

The intermediate sipe 130 has a similar configuration to the aforementioned central sipe 120. In other words, although omitted from illustration, the intermediate sipe 130 has similar portions to the wavy shape part 123, first sipe bridge 121 and the second sipe bridge 122 of the central sipe 120. Then, the period of the wavy shape part of the intermediate sipe 130 is fixed, and the amplitude is largest at the opening at the surface of the central block 70, and smallest at the bottom. The amplitudes of the openings, at the surface of the intermediate blocks 80, of the plurality of intermediate sipes 130 are equal to each other. The width of the intermediate sipe 130 is substantially fixed from the opening to the bottom. Accordingly, in a cross-sectional view in the depth direction which is substantially orthogonal to the extending direction of the intermediate sipe 130, the intermediate sipe 130 is linear from the opening to the bottom. The width of the intermediate sipe 130 is preferably at least 0.5 mm and no more than 1.5 mm.

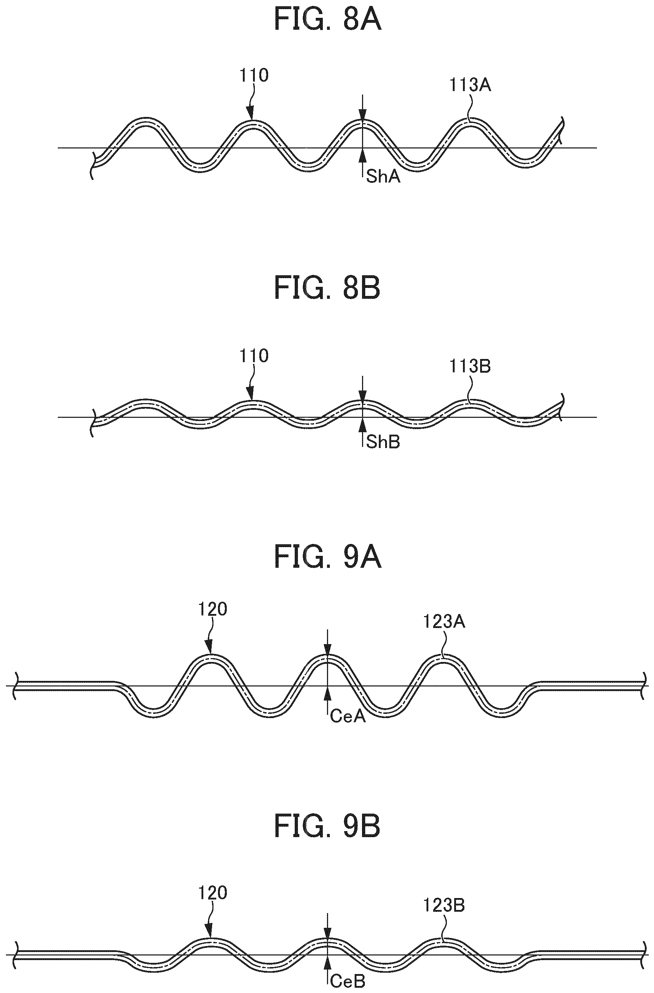

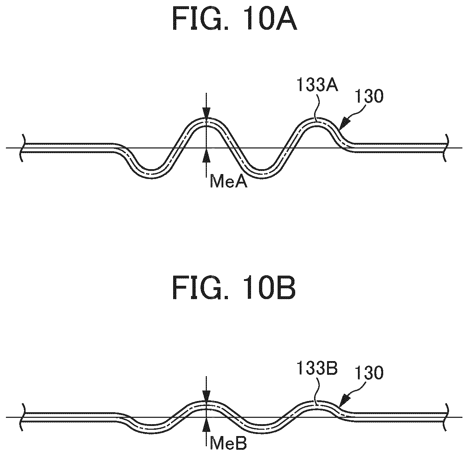

FIG. 8A is a plan view schematically showing an opening 113A of a wavy shape in the shoulder sipe 110, and shows amplitude ShA of the opening 113A. FIG. 8B is a plan view schematically showing a bottom 113B of a wavy shape in the shoulder sipe 110, and shows amplitude ShB of the bottom 113B. FIG. 9A is a plan view schematically showing an opening 123A of a wavy shape in the central sipe 120, and shows amplitude CeA of the opening 123A. FIG. 9B is a plan view schematically showing a bottom 123B of a wavy shape in the central sipe 120, and shows amplitude CeB of the bottom 123B. FIG. 10A is a plan view schematically showing an opening 133A of a wavy shape in the intermediate sipe 130, and shows amplitude MeA of the opening 133A. FIG. 10B is a plan view schematically showing a bottom 133B of a wavy shape in the intermediate sipe 130, and shows an amplitude MeB of the bottom 133B.

In the present embodiment, the above-mentioned amplitudes ShA, CeA and MeA are not equal. Specifically, the amplitude ShA of the shoulder sipe 110 is the smallest. The amplitude CeA of the central sipe 120 and the amplitude MeA of the intermediate sipe 130 are equal to each other, or the amplitude CeA of the central sipe 120 is greater than the amplitude MeA of the intermediate sipe 130. In other words, it is specified as "CeA ≧ MeA > ShA".

With the condition of "CeA ≧MeA > ShA", these amplitudes CeA, MeA and ShA are preferably each at least 0.5 mm and no more than 1.5 mm.

In addition, the amplitude ShB of the bottom 113B of the shoulder sipe 110, the amplitude CeB of the bottom 123B of the central sipe 120, and the amplitude MeB of the bottom 133B of the intermediate sipe 130 are preferably each at least 0.1 mm and no more than 0.6 mm.

In addition, the ratio A/B of the amplitude A to the amplitude B for every sipe is preferably at least 4.0 and no more than 7.0, where A is the amplitudes of the openings 113A, 123A, 133A of the respective sipes 110, 120, 130, and B is the amplitudes of the bottoms 113B, 123B, 133B of the respective sipes 110, 120, 130. In other words, each of ShA/ShB of the shoulder sipe 110, CeA/CeB of the central sipe 120, and MeA/MeB of the intermediate sipe 130 is preferably at least 4.0 and no more than 7.0.

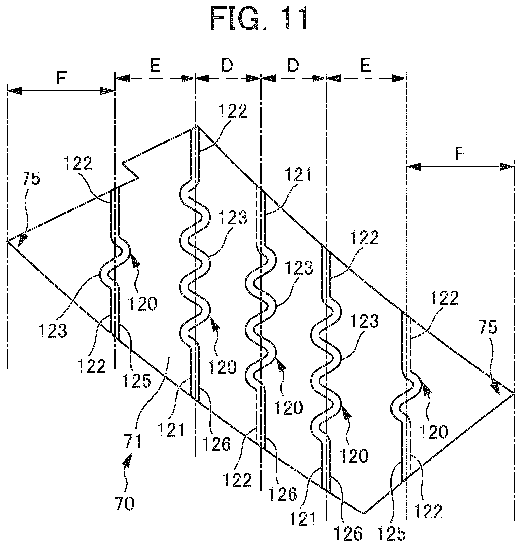

FIG. 11 illustrates a first central block 71 which is extracted among the blocks 13. The first central block 71 has four or more central sipes 120 arranged in parallel, and has five central sipes 120 in the present embodiment. It should be noted that, since the second central block 72 which is left/right symmetrical is the same configuration as the first central block 71, hereinafter, the explanation proceeds by collectively referring to both the central blocks 71 and 72 as "central block 70". It should be noted that the central sipe 120 is an example of a sipe in the present disclosure.

The central block 70 has a shape which is substantially a parallelogram, and has an acute angle region 75 at each of both ends in the arrangement direction of the plurality of central sipes 120. The acute angle region 75 is a region including acute corners and apexes of the corners in a tire surface view.

The five central sipes 120 include two first sipes 125 which are respectively arranged at both ends in the arrangement direction and are respectively closest to the acute angle regions 75. The five central sipes 120 include a plurality of second sipes 126 arranged between the first sipes 125. Herein, as shown in FIG. 11, while defining the interval between the pair of second sipes 126 adjacent to each other in the arrangement direction as D, and defining the interval between the first sipe 125 and the second sipe 126 adjacent to this first sipe 125 as E, the interval E is greater than the interval D. In addition, while defining the interval between the first sipe 125 closest to the acute angle region 75, and the end of the acute angle region 75 (i.e., an apex), as F, the interval F is greater than the interval E and the interval D.

As mentioned above, each of the first sipe 125 and the second sipe 126 includes the wavy shape part 123, the first sipe bridge 121 having a smaller depth than the wavy shape part 123, and the second sipe bridge 122 having a smaller depth than the first sipe bridge 121. Herein, in the three second sipes 126 excluding the two first sipes 125 closest to the acute angle region 75, the first sipe bridge 121 and the second sipe bridge 122 are alternately arranged with stagger in the arrangement direction. In other words, in the three second sipes 126, the sipe bridges on the upper end side in FIG. 11 are arranged in the order of second sipe bridge 122, the first sipe bridge 121, and the second sipe bridge 122 from the left side to right side. The sipe bridges on the lower end side in FIG. 11 are arranged in the order of the first sipe bridge 121, the second sipe bridge 122, and the first sipe bridge 121 from the left side to right side. As mentioned above, the first sipe bridge 121 and the second sipe bridge 122 are both shallower than the wavy shape part 123, and the second sipe bridge 122 is shallower than the first sipe bridge 121.

The depth of the wavy shape part 123 of the first sipe 125, and the depth of the wavy shape part 123 of the second sipe 126 may be the same; however, the depth of the wavy shape part 123 of the first sipe 125 is preferably smaller than the depth of the wavy shape part 123 of the second sipe 126.

According to the tire 1 of the above-mentioned embodiment, the following effects are exerted.

(1) The tire 1 according to a not claimed embodiment includes a tread 10. The tread 10 includes blocks 13 having sipes 14 extending in a direction which intersects a tire-circumferential direction. Each of the sipes 14 has a wavy shape with amplitude in an extending direction of the sipe 14 from an opening at the surface of the block 13 to a bottom. The amplitude is greatest at the opening and smallest at the bottom. The amplitude decreases at a fixed rate of change from the opening to the bottom, whereby the sipe 14 is linear from the opening to the bottom in a cross-sectional view in the depth direction which is substantially orthogonal to the extending direction of the sipe 14. The opening of the sipe referred to herein corresponds to the opening 113A of the shoulder sipe 110, the opening 123A of the central sipe 120, and the opening 133A of the intermediate sipe 130. The bottom of the sipe referred to herein corresponds to the bottom 113B of the shoulder sipe 110, the bottom 123B of the central sipe 120, and the bottom 133B of the intermediate sipe 130.

The bottom of each sipe 14 according to this not claimed embodiment does not have a linear shape along the extending direction of the sipe 14, but rather has amplitude. Upon stress acting on the block 13 of the tread surface 20 such as during braking or during starting off of the vehicle, both side portions of the sipe 14 of the block 13 tend to collapse according to the direction in which this stress acts. At this time, the bottom of the sipe 14 which has a wave shape as in the embodiment produces a force resisting stress and the forces is higher than that of the bottom of the sipe which has a linear shape. This reduces the chances of distortion of the blocks 13, and the decline in contact area of the surface of the block 13 is suppressed. For this reason, the traction improves. In addition, since distortion of the block 13 is suppressed, defects such as block chipping where a part or the entirety of the block 13 comes off is suppressed, whereby durability of the tire 1 improves.

In each of the sipes 14 of the present not claimed embodiment, the amplitude decreasing at a fixed rate of change from the opening at the surface of each block 13 to the bottom allows each of the sipes 14 to be linear from the opening to the bottom, in a cross-sectional view in the depth direction which is substantially orthogonal to the extending direction of each sipe 14. Accordingly, the bottom of the sipe 14 functions as the aforementioned starting point for collapse of the block 13. In addition, since both side portions of the sipe 14 of the block 13 tend to engage, the traction improves. The improvement in traction improves cornering performance and handling stability.

(2) In the tire 1 of the above (1) according to the present not claimed embodiment, the amplitude of the opening at the surface of the block 13 of the sipe 14 is preferably at least 0.5 mm and no more than 1.5 mm.

The aforementioned effects thereby tend to be achieved.

(3) In the tire 1 of the above (1) or (2) according to the present not claimed embodiment, the amplitude of the bottom of the sipe 14 is preferably at least 0.1 mm and no more than 0.6 mm.

The aforementioned effects thereby tend to be achieved.

(4) In the tire 1 any one of the above (1) to (3) according to the present not claimed embodiment, the width of the sipe 14 is preferably at least 0.5 mm and no more than 1.5 mm.

The aforementioned effects thereby tend to be achieved.

(5) In the tire 1 of any one of the above (1) to (4) according to the present not claimed embodiment, the ratio As/Ab is preferably at least 4.0 and no more than 7.0, where As is amplitude of the opening in the surface of the block 13 of the sipe 14, and B is amplitude of the bottom of the sipe 14.

The aforementioned effects thereby tend to be achieved.

(6) The tire 1 according to the claimed invention includes a tread 10. The tread 10 includes central blocks 70 and/or intermediate blocks (80) defined by grooves 12. Each of the central blocks 70 and/or intermediate block 80 has at least four central sipes 120 arranged in an arrangement direction. The at least four sipes 120 extend in a direction intersecting a tire-circumferential direction **C.** Each of the central blocks 70 and/or intermediate blocks 80 has a wavy shape with amplitude in a tire surface view. Each of the central blocks 70 and/or intermediate blocks 80 has acute angle regions 75 respectively disposed at both ends thereof in an arrangement direction. The at least four central sipes 120 include fist sipes 125 and second sipes 126. The first sipes 125 are respectively disposed at both the ends of the central block 70 and/or intermediate block 80 in the arrangement direction and are respectively closest to the acute angle regions 75. The second sipes 126 are arranged between the first sipes 125. An interval E between one of the first sipes 125 and the second sipe 126 adjacent to said first sipe 125 is greater than an interval D between a pair of the second sipes 126 adjacent to each other in the arrangement direction.

Generally, if the blocks of a tire have no sipe, the blocks have higher rigidity. If intervals between sipes are greater, the blocks have higher rigidity. In the central block 70 of the embodiment, since the acute angle regions 75 have lower rigidity than other portions, it is necessary to secure rigidity. Therefore, the interval E between the first sipe 125 and the second sipe 126 adjacent to the first sipe 125 are set to be greater than the interval D between the pair of the second sipes 126 adjacent to each other in the arrangement direction. Accordingly, a decline in rigidity of the acute angle regions 75 is suppressed. This reduces the chances of block chipping which tends to occur at the acute angle regions 75, thus securing durability and traction.

(7) The tire 1 according to the claimed invention includes a tread 10. The tread 10 includes central blocks 70 and/or intermediate blocks 80 defined by grooves 12. Each of the central blocks 70 and intermediate blocks 80 has at least three central sipes 120 arranged in an arrangement direction. Each of the central blocks 70 and/or intermediate blocks 80 has a wavy shape with amplitude in a tire surface view. Each of the central block 70 and/or intermediate block 80 has acute angle regions 75 respectively disposed at both ends thereof in the arrangement direction. The at least three central sipes 120 include first sipes 125 and second sipes 126. The first sipes 125 are respectively arranged at both the ends of the central block 70 and/or intermediate block 80 in the arrangement direction and are respectively closest to the acute angle regions 75. The second sipes 126 are arranged between the first sipes 125. An interval F between one of the first sipes 125 and an end of one of the acute angle regions 75 is greater than an interval E between one of the first sipes 125 and the second sipe 126 adjacent to said first sipe 125 in the arrangement direction. The interval F is greater than an interval D between a pair of the second sipes 126 adjacent to each other in the arrangement direction.

This reduces the chances of a decline in rigidity of the acute angle regions 75, thus reducing the chances of block chipping which tends to occur at the acute angle regions 75. As a result, durability and traction are secured.

(8) In the tire 1 of the above (6) or (7) according to the claimed invention, each of the plurality of central sipes 120 preferably include a wavy shape part 123, a first sipe bridge 121 and a second sipe bridge 122. The wavy part 123 has a wavy shape with amplitude in a tire surface view. The first sipe bridge 121 extends from one end of the wavy shape part 123 to one of the grooves 12 to be in communication with the groove 12. The first sipe bridge 121 is shallower than the wavy shape part 123. The second sipe bridge 122 extend from another end of the wavy shape part 123 to one of the grooves 12 to be in communication with the groove 12. The second sipe bridge is shallower than the first sipe bridge 121. The first sipe bridges 121 and second sipe bridges 122 are alternately arranged to be staggered in the arrangement direction.

This reduces the chances of collapse of both side portions of the central sipe 120 in the central block 70 on a dry road surface or wet road surface, and secures the grip performance from the edge effect of the central sipe 120 on a snowy road surface.

(9) In the tire 1 of any one of the above (6) to (8) according to the claimed invention, the depth of the wavy shape part 123 of the first sipe 125 is preferably smaller than the depth of the wavy shape part 123 of the second sipe 126.

This reduces the chances of a decline in rigidity of the acute angle regions 75, thus reducing the chances of block chipping which tends to occur at the acute angle regions 75. As a result, durability and traction are secured.

Since the intermediate block 80 (first intermediate block 81, second intermediate block 82) also has a pair of acute angle regions similarly to the central block 70, it is possible to apply the configuration of the sipe in the present disclosure also to the intermediate sipe 130 of the intermediate block 80.

For example, the wavy shape part of each sipe may be a wavy shape with the period of a trigonometric function, and may be a wavy shape in which only the vertex part may be the R shape of a relatively large curvature, and the between the vertices is linear. R of the vertex, or the radius of curvature of the R portion transitioning from the sipe bridge to the wavy shape part is arbitrary; however, it may be on the order of 0.6 mm, for example.

### EXPLANATION OF REFERENCE NUMERALS

1 tire (pneumatic tire)
10 tread
12 groove
13 block
75 acute angle region
120 central sipe (sipe)
121 first sipe bridge
122 second sipe bridge
123 wavy shape part
125 first sipe
126 second sipe

## Claims

1. A pneumatic tire (1) comprising a tread (10),
wherein
the tread (10) includes central blocks (70) and/or intermediate blocks (80) defined by grooves (12), each of the central blocks (70) and/or intermediate blocks (80) has at least four sipes (120, 130) arranged in an arrangement direction, the at least four sipes (120) extending in a direction intersecting a tire-circumferential direction (C), each of the sipes (120, 130) has a wavy shape with amplitude in a tire surface view, and each of the central blocks (70) and/or intermediate blocks (80) has acute angle regions (75) respectively disposed at both ends thereof in the arrangement direction,
the at least four sipes (120, 130) include first sipes (125) which are arranged at both the ends of the central block (70) and/or intermediate block (80) in the arrangement direction and are respectively closest to the acute angle regions (75), and a plurality of second sipes (126) arranged between the first sipes (125), and **characterized in that**
an interval (E) between one of the first sipes (125) and the second sipe (126) adjacent to said first sipe (125) is greater than an interval (D) between a pair of the second sipes (126) adjacent to each other in the arrangement direction.

2. A pneumatic tire (1) comprising a tread (10),
**characterized in that**
the tread (10) includes central blocks (70) and/or intermediate blocks (80) defined by grooves (12), each of the central blocks (70) and/or intermediate blocks (80) has at least three sipes (120) arranged in an arrangement direction, the at least three sipes (120) extending in a direction intersecting a tire-circumferential direction (C), each of the sipes (120) has a wavy shape with amplitude in a tire surface view, and each of the central blocks (70) and/or intermediate blocks (80) has acute angle regions (75) respectively disposed at both ends thereof in the arrangement direction, and
the sipes (120) include end sipes (125) respectively disposed at both ends of the central blocks (70) and/or intermediate blocks (80) and are respectively closest to the acute angle regions (75), and an interval (F) between one of the end sipes (125) and one of the ends of the central block (70) and/or intermediate block (80) is greater than an interval (E, D) between a pair of the sipes (125, 126) adjacent to each other in the arrangement direction.

3. The pneumatic tire (1) according to claim 1 or 2, **characterized in that** each of the sipes (120) includes a wavy shape part (123) having a wavy shape with amplitude in a tire surface view;
a first sipe bridge (121) which extends from one end of the wavy shape part (123) to one of the grooves (12) to be in communication with said groove (12), and is shallower than the wavy shape part (123);
a second sipe bridge (122) which extends from another end of the wavy shape part (123) to one of the grooves (12) to be in communication with said groove (12), and is shallower than the first sipe bridge (121), and
the first sipe bridges (121) and the second sipe bridges (122) are alternately arranged to be staggered in the arrangement direction.

4. The pneumatic tire (1) according to any one of claims 1 to 3, **characterized in that** a depth of the wavy shape part (123) in the first sipe (125) is smaller than a depth of the wavy shape part (123) in the second sipe (126).

## Patentansprüche

1. Ein Luftreifen (1) mit einem Laufstreifen (10), wobei
der Laufstreifen (10) Mittelblöcke (70) und/oder Zwischenblöcke (80) beinhaltet, die durch Nuten (12) definiert sind, wobei jeder der Mittelblöcke (70) und/oder Zwischenblöcke (80) mindestens vier Lamellenschnitte (sipes) (120, 130) aufweist, die in einer Anordnungsrichtung angeordnet sind, wobei sich die mindestens vier Lamellenschnitte (120) in einer Richtung erstrecken, die eine Reifenumfangsrichtung (C) schneidet, wobei jeder der Lamellenschnitte (120, 130) eine wellenförmige Gestalt mit einer Amplitude in einer Reifenoberflächenansicht aufweist, und wobei jeder der Mittelblöcke (70) und/oder Zwischenblöcke (80) spitzwinklige Bereiche (75) aufweist, die jeweils an beiden Enden davon in Anordnungsrichtung angeordnet sind, wobei die mindestens vier Lamellenschnitte (120, 130) erste Lamellenschnitte (125) beinhalten, die an beiden Enden des Mittelblocks (70) und/oder Zwischenblocks (80) in Anordnungsrichtung angeordnet sind und jeweils den spitzwinkligen Bereichen (75) am nächsten liegen, sowie eine Vielzahl von zweiten Lamellenschnitten (126), die zwischen den ersten Lamellenschnitten (125) angeordnet sind, und
**dadurch gekennzeichnet, dass**
ein Abstand (E) zwischen einem von den ersten Lamellenschnitten (125) und dem zweiten Lamellenschnitt (126), die an den genannten ersten Lamellenschnitt (125) angrenzt, größer ist als ein Abstand (D) zwischen einem Paar der zweiten Lamellenschnitte (126), die in Anordnungsrichtung aneinander angrenzen.

2. Ein Luftreifen (1) mit einem Laufstreifen (10), **dadurch gekennzeichnet, dass** der Laufstreifen (10) Mittelblöcke (70) und/oder Zwischenblöcke (80) beinhaltet, die durch Nuten (12) definiert sind, dass jeder der Mittelblöcke (70) und/oder Zwischenblöcke (80) mindestens drei Lamellenschnitte (120) aufweist, die in einer Anordnungsrichtung angeordnet sind, dass sich die mindestens drei Lamellenschnitte (120) in einer Richtung erstrecken, die eine Reifenumfangsrichtung (C) schneidet, dass jeder der Lamellenschnitte (120) eine wellenförmige Gestalt mit einer Amplitude in einer Reifenoberflächenansicht aufweist, und dass jeder der Mittelblöcke (70) und/oder Zwischenblöcke (80) spitzwinklige Bereiche (75) aufweist, die jeweils an beiden Enden davon in Anordnungsrichtung angeordnet sind, und dass
die Lamellenschnitte (120) End-Lamellenschnitte (125) beinhalten, die jeweils an beiden Enden der Mittelblöcke (70) und/oder Zwischenblöcke (80) angeordnet sind und jeweils den spitzwinkligen Bereichen (75) am nächsten liegen, und dass ein Abstand (F) zwischen einem der Enden der End-Lamellenschnitte (125) und einem der Enden des Mittelblocks (70) und/oder Zwischenblocks (80) größer ist als ein Abstand (E, D) zwischen einem Paar der Lamellenschnitte (125, 126), die in Anordnungsrichtung nebeneinander liegen.

3. Der Luftreifen (1) nach Anspruch 1 oder 2, **dadurch gekennzeichnet, dass** jeder der Lamellenschnitte (120) Folgendes beinhaltet: einen wellenförmigen Teil (123) mit einer Wellenform mit Amplitude in einer Reifenoberflächenansicht;
eine erste Lamellenschnittbrücke (121), die sich von einem Ende des wellenförmigen Teils (123) zu einer von mehreren Nuten (12) erstreckt, um mit dieser Nut (12) in Verbindung zu stehen, und die flacher ist als der wellenförmige Teil (123);
eine zweite Lamellenschnittbrücke (122), die sich von einem anderen Ende des wellenförmigen Teils (123) zu einer von mehreren Nuten (12) erstreckt, um mit dieser Nut (12) in Verbindung zu stehen, und die flacher ist als die erste Lamellenschnittbrücke (121), und **dass**
die ersten Lamellenbrücken (121) und die zweiten Lamellenbrücken (122) abwechselnd so angeordnet sind, dass sie in der Anordnungsrichtung versetzt sind.

4. Der Luftreifen (1) nach irgendeinem der Ansprüche von 1 bis 3, **dadurch gekennzeichnet, dass** die Tiefe des wellenförmigen Teils (123) im ersten Lamellenschnitt (125) geringer ist als die Tiefe des wellenförmigen Teils (123) im zweiten Lamellenschnitt (126).

## Revendications

1. Un pneu pneumatique (1) comprenant une bande de roulement (10), sachant que
la bande de roulement (10) inclut des blocs centraux (70) et/ou des blocs intermédiaires (80) définis par des rainures (12), chacun des blocs centraux (70) et/ou des blocs intermédiaires (80) présente au moins quatre fentes de lamelle *(sipes)* (120, 130) disposées selon une direction d'agencement, les au moins quatre fentes de lamelle (120) s'étendant dans une direction coupant une direction circonférentielle (C) de pneu, chacune des fentes de lamelle (120, 130) présentant une forme ondulée avec une amplitude dans une vue de surface du pneu, et chacun des blocs centraux (70) et/ou des blocs intermédiaires (80) présentant des régions à angle aigu (75) disposées aux deux extrémités de ceux-ci dans la direction d'agencement,
lesdites au moins quatre fentes de lamelle (120, 130) incluent des premières fentes de lamelle (125) qui sont agencées aux deux extrémités du bloc central (70) et/ou du bloc intermédiaire (80) dans la direction d'agencement et sont respectivement les plus proches des régions à angle aigu (75), et une pluralité de deuxièmes fentes de lamelle (126) agencées entre les premières fentes de lamelle (125), et
**caractérisé en ce que**
un intervalle (E) entre l'une des premières fentes de lamelle (125) et la deuxième fente de lamelle (126) adjacente à ladite première fente de lamelle (125) est supérieur à un intervalle (D) entre une paire de deuxièmes fentes de lamelle (126) adjacentes l'une à l'autre dans la direction d'agencement.

2. Un pneu pneumatique (1) comprenant une bande de roulement (10), **caractérisé en ce que**
la bande de roulement (10) inclut des blocs centraux (70) et/ou des blocs intermédiaires (80) définis par des rainures (12), chacun des blocs centraux (70) et/ou des blocs intermédiaires (80) présente au moins trois fentes de lamelle (120) agencées dans une direction d'agencement, les au moins trois fentes de lamelle (120) s'étendant dans une direction coupant une direction circonférentielle (C) de pneu, chacune des fentes de lamelle (120) présente une forme ondulée avec une amplitude dans une vue en surface du pneu, et que chacun des blocs centraux (70) et/ou des blocs intermédiaires (80) présente des régions à angle aigu (75) disposées respectivement aux deux extrémités de ceux-ci dans la direction d'agencement, et que les fentes de lamelle (120) incluent des fentes de lamelle d'extrémité (125) disposées respectivement aux deux extrémités des blocs centraux (70) et/ou des blocs intermédiaires (80) et sont respectivement les plus proches des régions à angle aigu (75), et qu'un intervalle (F) entre l'une des fentes de lamelle d'extrémité (125) et l'une des extrémités du bloc central (70) et/ou du bloc intermédiaire (80) est supérieur à un intervalle (E, D) entre une paire de fentes de lamelle (125, 126) adjacentes l'une à l'autre dans la direction d'agencement.

3. Le pneu pneumatique (1) d'après la revendication 1 ou 2, **caractérisé en ce que** chacune des fentes de lamelle (120) inclut une partie à forme ondulée (123) présentant une forme ondulée avec une amplitude dans une vue en surface du pneumatique ;
un premier pont de fente de lamelle (121) qui s'étend depuis une extrémité de la partie à forme ondulée (123) jusqu'à l'une des rainures (12) pour être en communication avec ladite rainure (12), et qui est moins profond que la partie à forme ondulée (123) ;
un deuxième pont de fente de lamelle (122) qui s'étend depuis une autre extrémité de la partie à forme ondulée (123) jusqu'à l'une des rainures (12) afin d'être en communication avec ladite rainure (12), et qui est moins profond que le premier pont de fente de lamelle (121), et **que**
les premiers ponts de fentes de lamelle (121) et les deuxièmes ponts de fentes de lamelle (122) sont agencés en alternance de manière à être décalés dans la direction d'agencement.

4. Le pneu pneumatique (1) d'après l'une quelconque des revendications de 1 à 3, **caractérisé en ce qu'**une profondeur de la partie à forme ondulée (123) dans la première fente de lamelle (125) est inférieure à la profondeur de la partie à forme ondulée (123) dans la deuxième fente de lamelle (126).
